# EUROPEAN PATENT APPLICATION

(11) **EP 1 865 742 A1**
(43) Date of publication of application: **12.12.2007**
(21) Application number: 07107675.6
(22) Date of filing: 08.05.2007
(51) Int. Cl.: H04Q 7/38

(54) **Cell reselection apparatus and method of wireless communication system**

(30) Priority: 07.06.2006 KR 20060050839
(71) Applicant: Samsung Electronics Co., Ltd., Suwon-si, Gyeonggi-Do (KR)
(72) Inventor: Sohn, Chang-Ho, Bundang-gu Seongnam-si Gyeonggi-do (KR)
(74) Representative: Grünecker, Kinkeldey, Stockmair & Schwanhäusser Anwaltssozietät

(57) **Abstract**

An apparatus and method for cell reselection of a wireless communication system are provided. The cell reselection method for use in a mobile station of the wireless communication system includes checking and storing information about the mobile station's supported networks, the information being contained in a message received from a predetermined cell; determining if the mobile station has authority over a cell reselected during a cell reselection procedure by using the information; and performing camping on the reselected cell when the mobile station has authority over the reselected cell.

## Description

The present invention relates generally to an apparatus and method for cell reselection of a wireless communication system, and in particular, to an apparatus and method for cell reselection of a wireless communication system, which can prevent a mobile station from attempting unnecessary camping on an unauthorized network during a cell reselection.

Global System for Mobile Communication (GSM) is the most popular standard for second generation (2G) digital mobile phones and is widely used in the European countries. General Packet Radio Services (GPRS) is a packet-based mobile communication service. Based on GSM, GPRS evolved from GSM to a third generation (3G) communication system such as Universal Mobile Telecommunication Service (UMTS).

UMTS is based on the GSM standard but uses a Wideband Code Division Multiple Access (WCDMA) scheme. UMTS can provide a service that transmits packet-based text, digital audio and video, and multimedia data at a high data rate of above 2 Mbps.

During the evolution from the 2G communication system, such as GSM/GPRS, to the 3G communication system, such as the UMTS, a network using the 2G communication system and a network using the 3G communication system coexisted.

In the wireless communication system, a mobile station (MS) measures strengths of signals received from neighboring cells. When a cell reselection is necessary, the MS selects a cell only using radio resource information and performs camping on the selected cell. When the network using the 2G communication system and the network using the 3G communication system coexist, the MS may attempt unnecessary camping on an unauthorized network because the MS selects a cell only using radio resource information of the networks and camps on the selected cell, resulting in unnecessary power consumption. The MS with a Subscriber Identity Module (SIM) card used in the 2G communication system has no authority in the 3G communication system. However, the MS often attempts camping on the 3G communication system only using the radio resource information of the networks.

The present invention has been designed to substantially solve at least the above problems and/or disadvantages and to provide at least the advantages below. Accordingly, the object of the present invention is to provide an apparatus and method for a cell reselection of a wireless communication system, which can prevent an MS from attempting camping on an unauthorized network.

This object is solved by the subject matter of the independent claims.

Preferred embodiments are defined by the dependent claims.

An aspect of the present invention is to provide an apparatus and method for a cell reselection of a wireless communication system, which can recognize an unauthorized network by adding a newly defined field.

According to one aspect of the present invention, a cell reselection method for use in a mobile station of a wireless communication system includes checking and storing information about the mobile station's supportable network, the information being contained in a message received from a predetermined cell; determining if the mobile station has authority over a cell reselected during a cell reselection procedure by using the information; and performing camping on the reselected cell when the mobile station has the authority over the reselected cell.

According to another aspect of the present invention, a cell reselection method for use in a cell of a wireless communication system includes performing a radio resource control (RRC) connection to a mobile station; and transmitting information about the mobile station's supportable network to the mobile station.

According to a further aspect of the present invention, a mobile station of a wireless communication system includes a message processor for checking information about the mobile station's supportable network, the information being contained in a message received from a predetermined cell; a usable network checker for checking if the mobile station has authority over the predetermined cell according to the checked information; and a controller for determining camping on the cell according to the checking result of the usable network checker. Accordingly, it is possible to prevent unnecessary camping on an unauthorized network.

The present invention will become more apparent from the following detailed description when taken in conjunction with the accompanying drawings in which:
FIG. 1 is a flowchart of an operation of a network during a cell reselection procedure according to the present invention;
FIG. 2 is a flowchart of an operation of an MS during a cell reselection procedure according to the present invention; and
FIG. 3 is a block diagram of an MS according to the present invention.

Preferred embodiments of the present invention will be described herein below with reference to the accompanying drawings. In the following description, well-known functions or constructions are not described in detail since they would obscure the invention in unnecessary detail.

Hereinafter, a cell reselection method that can prevent an MS from attempting unnecessary camping on an unauthorized network will be described in detail.

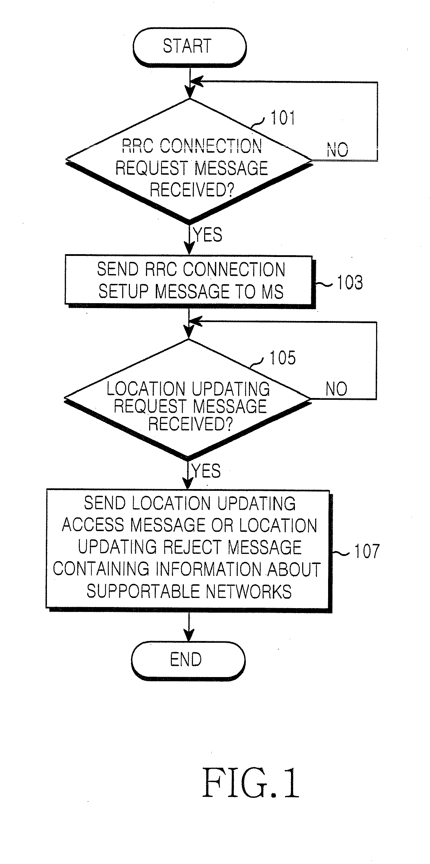

Referring to FIG. 1, the cell determines in step 101 if a Radio Resource Control (RRC) connection request message is received from the MS.

In step 103, when the RRC connection request message is received, the cell determines Quality of Service (QoS) required by the corresponding MS. An RRC connection setup message containing information about a transmission channel and a physical channel to be allocated to the MS is sent to the MS according to a transmission capacity expected at the QoS.

In step 105, after sending the RRC connection setup message, the cell determines if a location updating request message is received from the MS.

In step 107, when the location updating request message is received, the cell sends a location updating accept message or a location updating reject message containing information about the MS's supportable networks to the MS. As one example, the information about the MS's supported networks can be transmitted by adding a 1-byte (8-bit) field of Table 1 to the location updating accept message.

**Table 1**

| 7 | 6 | 5 | 4 | 3 | 2 | 1 | 0 |
|---|---|---|---|---|---|---|---|
| Spare | Spare | Spare | Spare | CDMA 1X | 3G | 2G | All networks |

As shown in Table 1, when the MS supports all compatible networks, the 0^{th} bit is set to 1. When the MS supports a 2G (GSM/GPRS) network and a CDMA 1X network, the 1^{st} bit and the 3^{rd} bit are set to 1.

As another example, the information about the MS's supportable networks can be transmitted by adding the 1-byte field of Table 1 to the location updating reject message. Then, the cell terminates the process.

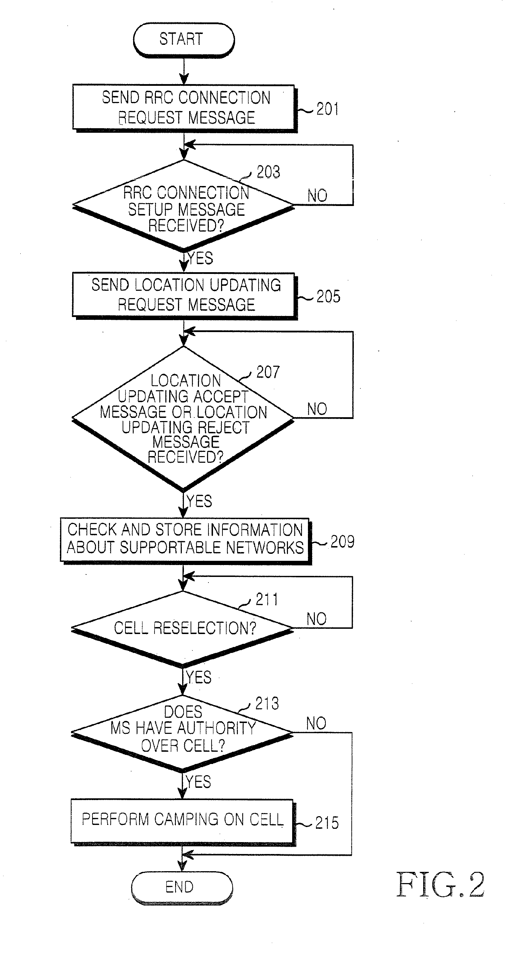

Referring to FIG. 2, in step 201, the MS sends the RRC connection request message to the cell in order to set the RRC connection to the reselected cell.

In step 203, the MS determines if the RRC connection setup message is received from the cell. The RRC connection setup message contains the information about the allocated transmission channel and the physical channel.

In step 205, when the RRC connection setup message is received from the cell, the MS sends the location updating request message to the cell by using the information about the allocated transmission channel and physical channel.

In step 207, the MS determines if the location updating accept message or the location updating reject message is received from the cell.

In step 209, when the location updating accept message or the location updating reject message is received, the MS checks the information for supported networks and stores the checked information. For example, the MS checks the information for supported networks through the newly defined field shown in Table 1. When the 0^{th} bit in Table is 1, the MS determines that it can support all compatible networks. When the 1^{st} bit and the 3^{rd} bit are 1, the MS determines that it can support only the 2G (GSM/GPRS) network and the CDMA 1X system. A compatible network is one that sends the location updating accept message to the MS. The checked information is stored.

In step 211, after checking and storing the information about the MS's supported networks, the MS determines if the cell reselection is performed.

In step 213, when the cell reselection is performed, the MS determines if it has authority over the reselected cell. That is, using the stored information, the MS checks if it has an authority over the selected cell.

When the MS has no authority over the selected cell, it does not perform camping on the selected cell and terminates the process.

In step 215, when the MS has the authority over the selected cell, the MS performs camping on the selected cell and terminates the process.

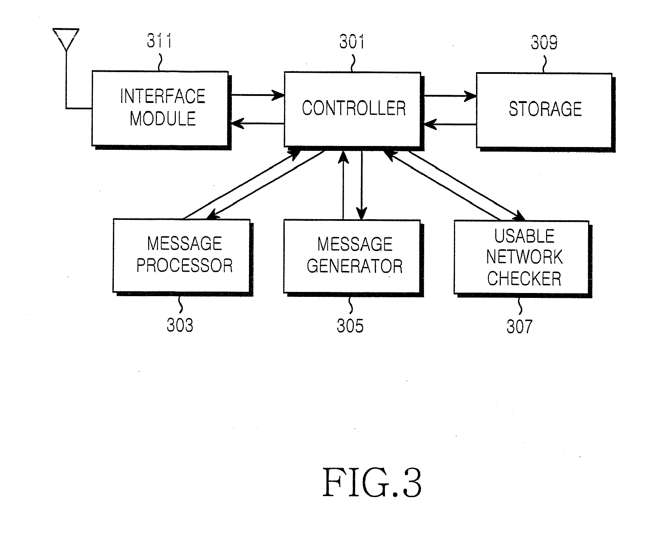

Referring to FIG. 3, the MS includes a controller 301, a message processor 303, a message generator 305, a usable network checker 307, a storage 309, and an interface module 311.

Controller 301 controls the overall operation of the MS. The MS processes and controls voice communication and data communication. In addition, controller 301 determines the MS's supported networks and controls the camping procedure.

Message processor 303 analyzes a control message received from the cell and reports the analysis result to controller 301. When the message containing the information of the MS's supported networks as shown in Table 1 is received from the cell, message processor 303 extracts the information about the MS's supported networks and sends the extracted information to controller 301. The information about the MS's supported networks may be contained in the location updating accept message or the location updating reject message.

Controller 301 stores the received information in storage 309.

Message generator 305 generates a message to be sent to the cell under control of controller 301. For example, message generator 305 generates the RRC connection request message and the location updating request message. The message generated by message generator 305 is sent to interface module 311 through controller 305.

Usable network checker 307 checks the stored information about the MS's supportable networks under control of controller 301 and determines if the MS has an authority over the cell to which the cell reselection is performed. Then, usable network checker 307 transmits the determination result to controller 307.

Storage 309 stores the control program and temporary data generated during the execution of the control program. Also, storage 309 stores the information about the MS's supportable networks.

Interface module 311 is a module for communication with the cell and includes an RF processor and a baseband processor.

Because the network of the wireless communication system provides the information about the MS's supported networks to the MS, it is possible to prevent the MS from attempting unnecessary camping on the unauthorized network during the cell reselection procedure of the MS, reducing unnecessary power consumption and waste of radio resources.

Alternate embodiments of the present invention can also comprise computer readable codes on a computer readable medium. The computer readable medium includes any data storage device that can store data that can be read by a computer system. Examples of a computer readable medium include magnetic storage media (such as ROM, floppy disks, and hard disks, among others), optical recording media (such as CD-ROMs or DVDs), and storage mechanisms such as carrier waves (such as transmission through the Internet). The computer readable medium can also be distributed over network coupled computer systems so that the computer readable code is stored and executed in a distributed fashion. Also, functional programs, codes, and code segments for accomplishing the present invention can be construed by programmers of ordinary skill in the art to which the present invention pertains.

While the invention has been shown and described with reference to certain preferred embodiments thereof, it will be understood by those skilled in the art that various changes in form and details may be made therein without departing from the scope of the invention as further defined by the appended claims.

## Claims

1. A cell reselection method for use in a mobile station of a wireless communication system, comprising the steps of:
checking and storing information about the mobile station's supported networks, the information being contained in a message received from a cell;
determining if the mobile station has authority over a cell reselected during a cell reselection procedure; and
performing camping on the reselected cell when the mobile station has authority over the reselected cell.

2. The cell reselection method of claim 1, wherein the message comprises a location updating accept message.

3. The cell reselection method of claim 1, wherein the message comprises a location updating reject message.

4. The cell reselection method of one of claims 1 to 3, further comprising the step of inhibiting camping on the reselected cell when the mobile station has no authority over the reselected cell.

5. A cell reselection method for use in a cell of a wireless communication system, comprising the steps of:
performing a radio resource control connection to a mobile station; and
transmitting information about the mobile station's supported networks to the mobile station.

6. The cell reselection method of claim 5, wherein the information about the mobile station's supported networks is contained in a location updating accept message.

7. The cell reselection method of claim 5, wherein the message comprises a location updating reject message.

8. A mobile station of a wireless communication system, the mobile station being adapted to prevent unnecessary camping on an unauthorized network, comprising:
a message processor for checking information about the mobile station's supported networks, the information being contained in a message received from a cell;
a usable network checker for checking if the mobile station has authority over the cell according to the checked information; and
a controller for determining camping on the cell according to the checking result of the usable network checker.

9. The mobile station of claim 8, further comprising a storage for storing the checked information about the mobile station's supported networks.

10. The mobile station of claim 8, wherein the information about the mobile station's supportable network is contained in a location updating accept message.

11. The mobile station of one of claims 8 to 10, wherein the information about the mobile station's supportable network is contained in a location updating reject message.

12. A computer-readable medium having recorded thereon a program for a cell reselection in a mobile station of a wireless communication system, comprising:
a first code segment for checking and storing information about the mobile station's supported networks, the information being contained in a message received from a cell;
a second code segment for determining if the mobile station has authority over a cell reselected during a cell reselection procedure; and
a third code segment for performing camping on the reselected cell when the mobile station has authority over the reselected cell.

13. A computer-readable medium having recorded thereon a program for a cell reselection in a cell of a wireless communication system, comprising:
a first code segment for performing a radio resource control connection to a mobile station; and
a second code segment for transmitting information about the mobile station's supported networks to the mobile station.
